(19) Europäisches Patentamt
European Patent Office
Office européen des brevets

(11) **EP 2 845 311 B1**

(12) **FASCICULE DE BREVET EUROPEEN**

(45) Date de publication et mention
de la délivrance du brevet:
**18.07.2018 Bulletin 2018/29**

(21) Numéro de dépôt: **13723836.6**

(22) Date de dépôt: **19.04.2013**

(51) Int Cl.:
*G01D 5/12* (2006.01)          *G01B 7/30* (2006.01)
*H02P 21/32* (2016.01)        *H02P 21/18* (2016.01)
*H02P 6/16* (2016.01)

(86) Numéro de dépôt international:
**PCT/FR2013/050868**

(87) Numéro de publication internationale:
**WO 2013/164527 (07.11.2013 Gazette 2013/45)**

(54) **PROCÉDÉ DE DÉTERMINATION DU DÉCALAGE ANGULAIRE ENTRE LE ROTOR ET LE STATOR D'UNE MACHINE ÉLECTRIQUE D'UN VÉHICULE AUTOMOBILE**

VERFAHREN ZUR BESTIMMUNG DES WINKELVERSATZES ZWISCHEN DEM ROTOR UND STATOR EINER ELEKTRISCHEN MASCHINE EINES KRAFTFAHRZEUGS

METHOD FOR DETERMINING THE ANGULAR OFFSET BETWEEN THE ROTOR AND THE STATOR OF AN ELECTRICAL MACHINE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2012 FR 1253965**

(43) Date de publication de la demande:
**11.03.2015 Bulletin 2015/11**

(73) Titulaire: **Renault S.A.S.**
**92100 Boulogne-Billancourt (FR)**

(72) Inventeur: **NEGRE, Edouard**
**F-78180 Montigny le Bretonneux (FR)**

(56) Documents cités:
**FR-A1- 2 874 466          US-A1- 2005 104 551**
**US-A1- 2009 096 396**

**EP 2 845 311 B1**

**Description**

L'invention a pour domaine technique les machines électriques, et plus particulièrement la commande de telles machines.

Une machine synchrone, également appelée moteur électrique à courants alternatifs synchrone, a pour principe de produire un couple, moteur ou résistant à partir de l'interaction de deux champs magnétiques. L'un des champs est dit d'excitation rotorique car lié au rotor, partie tournante de la machine. L'autre est dit statorique car lié au stator, partie statique de la machine. Le champ statorique est le fruit d'un flux magnétique produit par des courants alternatifs parcourant les phases de la machine. Ces courants sont pilotés de manière à produire un flux synchrone par rapport au rotor, c'est-à-dire tournant à la même vitesse que lui. Ainsi, le champ magnétique statorique est piloté en quadrature, c'est-à-dire piloté pour être en déphasage constant de 90° avec le champ rotorique. Une telle configuration produit un couple mécanique, moteur ou frein, selon que le déphasage est positif ou négatif. A haute vitesse il peut-être nécessaire de dé-fluxer le rotor par le stator, et pour cela de piloter le déphasage à un angle supérieur à 90°.

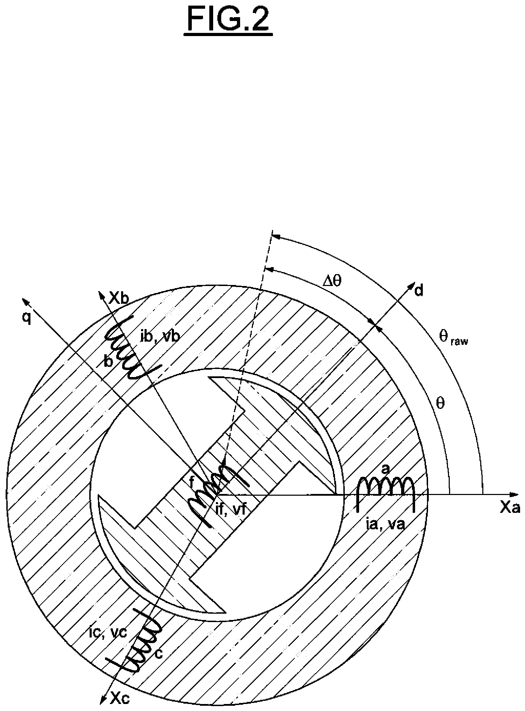

Dans tous les cas, pour piloter le déphasage des champs, un système de commande des courants électriques statorique nécessite une information de position du rotor de la machine. Elle est obtenue par l'intermédiaire d'un dispositif de mesure de position angulaire absolue du rotor par rapport au stator. Une tel dispositif de mesure est disposé au centre de rotation du rotor qui est également l'origine des repères (Xa,Xb,Xc) et (d,q,f) illustrés par la figure 2.

Dans la plupart des cas, ce dispositif de mesure n'est pas positionné de façon suffisamment précise pour fournir directement une position angulaire absolue, mais plutôt une position angulaire relative. La position angulaire relative est décalée d'un décalage angulaire constant par rapport à la position angulaire absolue. Il est ainsi nécessaire de fournir la valeur de décalage angulaire au système afin qu'il puisse calculer la position angulaire absolue. Ceci est réalisé au cours d'une procédure de détermination ou d'apprentissage. Une fois ce décalage déterminé et mémorisé par le système de commande des courants électriques statoriques, le dispositif de mesure angulaire est opérationnel et les courants statoriques peuvent être produits avec une phase adéquate par rapport au rotor de la machine.

L'état de l'art comprend des procédures d'apprentissage du décalage angulaire, également appelé décalage de mesure de position, consistant en l'orientation du rotor sur le stator par alignement des champs magnétiques statorique et rotorique. Ces procédures nécessitent donc la rotation du rotor, sur un ou plusieurs tours, et ce sans charge mécanique sur le rotor.

La plupart des applications industrielles de machines synchrones sont des applications de pilotage en vitesse où la phase initiale de mise en route tolère un certain retard à l'application du couple. Dans ces cas-là, un dispositif sans capteur, avec estimateur de position peut être envisagé.

De l'état de la technique, on connait également les documents suivants: FR2874466, US2009/096396, US2005/104551. Les documents DE 102010017411A1 et WO 201203825A2 divulguent une méthode de compensation d'un décalage angulaire de la mesure de position en utilisant la force électromotrice de la machine et la détection du passage par 0V.

Le document EP 1014554A2 divulgue une méthode de détection d'une erreur de mesure de position et de correction adaptative par corrélation entre courants et tensions dans le plan de Park synchrone.

Le document JP 2006136123A divulgue le pilotage sans capteur d'une machine synchrone à rotor bobiné. L'addition d'un générateur de tension alternative au circuit d'alimentation du rotor permet de créer une oscillation de l'excitation produisant une tension induite au stator et permettant d'obtenir une estimation de la position du rotor.

Dans le cadre de l'application aux groupes motopropulseurs automobiles, la rotation sans charge du rotor implique soit de déconnecter le rotor de la transmission, soit de lever le véhicule de manière à laisser les roues libres en rotation.

Dans le cas d'une première utilisation d'un nouveau groupe motopropulseur ou suite au remplacement de la machine électrique, du capteur de position angulaire ou du système de commande des courants électriques, il est nécessaire de réaliser une détermination du décalage de mesure de position. Si celle-ci est omise ou n'est pas correctement réalisée, le moteur peut ne produire aucun couple moteur, ou même produire un couple en sens inverse à ce qui est commandé, ce qui peut conduire à des effets indésirables et potentiellement dangereux.

Il existe donc un besoin pour un procédé de détermination de décalage angulaire entre rotor et stator plus simple à mettre en oeuvre.

L'invention a pour objet un procédé de détermination du décalage angulaire entre le rotor et le stator d'une machine électrique assurant la propulsion d'un véhicule automobile, le rotor étant alimenté par un courant et une tension d'excitation rotorique, le stator étant alimenté sur trois phases par des courants et tensions de phases statoriques. Le procédé comprend les étapes suivantes. On vérifie que la machine électrique est à l'arrêt, on applique un signal d'excitation rotorique pendant un laps de temps apte à provoquer une magnétisation partielle du rotor, on applique un signal de désexcitation rotorique apte à provoquer une démagnétisation active et rapide du rotor, tout en mesurant pendant la démagnétisation, les courants de phases statoriques, et en maintenant des tensions nulles entre les phases du stator. On détermine ensuite des courants statoriques directs et des courants statoriques en quadrature correspondant aux courants de phases statoriques mesurés par application de la transformation de Park-Clarke et en fonction d'une mesure de la position électrique du rotor, on détermine les valeurs maximales parmi les courants statoriques direct et les courants statoriques en quadrature, on émet un signal de défaut de calage angulaire si la valeur absolue de la valeur maximale du courant statorique en quadrature est supérieure à une valeur de seuil, et on détermine une correction du décalage angulaire en radians en calculant l'arc tangente du rapport entre la valeur maximale du courant statorique en quadrature et la valeur maximale du courant statorique direct.

On peut procéder à une magnétisation partielle du rotor en provoquant l'apparition d'un courant d'excitation rotorique supérieur à un courant de seuil de magnétisation.

On peut procéder à la démagnétisation du rotor en provoquant la réduction du courant d'excitation rotorique en dessous d'une valeur de seuil de démagnétisation.

Le signal d'excitation rotorique et le signal de désexcitation rotorique peuvent être des courants d'excitation rotorique, ou des tensions d'excitation rotorique.

Le signal d'excitation rotorique et le signal de désexcitation rotorique peuvent former un motif choisi parmi des motifs de forme rectangulaire, triangulaire, sinusoïdale, ou dirac.

On peut déterminer les valeurs maximales des courants statoriques directs et des courants statoriques en quadrature en fin de démagnétisation, lorsque le courant d'excitation rotorique est nul.

On peut déterminer les valeurs maximales des courants statoriques directs et des courants statoriques en quadrature en début de démagnétisation, lorsque le courant d'excitation rotorique est maximal.

On peut déterminer les valeurs maximales des courants statoriques directs et des courants statoriques en quadrature à un moment favorable du déroulé du profil de courant ou de tension d'excitation rotorique, où le gradient du courant d'excitation rotorique est maximal.

Le procédé présente l'avantage d'être entièrement transparent pour l'utilisateur car il ne nécessite pas de rotation du rotor, ni de production d'un couple.

Ce procédé est également rapide car il peut être réalisé en environ 300 à 400ms, tandis que la procédure classique généralement utilisée décrite en relation avec l'art antérieur nécessite plus d'une minute.

Ce procédé n'induit aucun surcoût dans sa mise en oeuvre car tous les dispositifs requis sont pré-existant dans le système de commande du moteur.

Le procédé peut être exécuté de façon systématique avant tout démarrage, éliminant ainsi tout risque d'une erreur de calage angulaire du dispositif de mesure de position du rotor. Une telle exécution systématique est impossible avec les procédés de l'art antérieur.

D'autres buts, caractéristiques et avantages apparaîtront à la lecture de la description suivante donnée uniquement en tant qu'exemple non limitatif et faite en référence en référence aux figures annexées sur lesquelles :

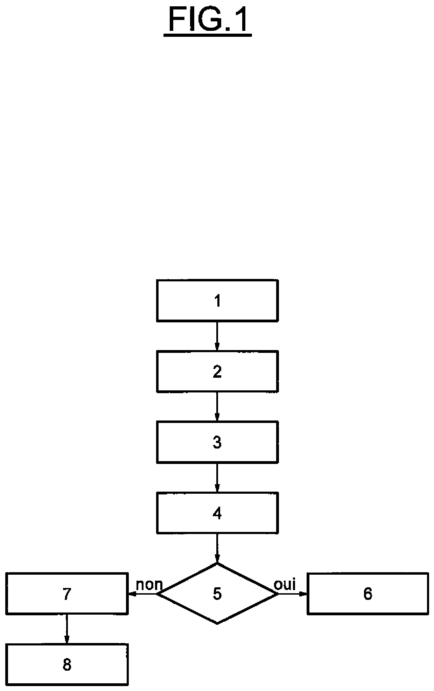

- la figure 1 illustre les principales étapes de procédé, et
- la figure 2 illustre les différents repères et angles d'une machine électrique.

Comme on l'a vu en introduction, une machine électrique comprend un stator, partie fixe de la machine, et un rotor, partie tournante reliée à l'arbre de sortie et permettant de transmettre le couple mécanique produit.

Le stator comprend des bobinages parcourus par les courants statoriques, et qui produisent des flux magnétiques guidés par le corps du stator pour se refermer sur le rotor.

Le rotor comprend des bobinages parcourus par le courant d'excitation rotorique, et qui produisent des flux magnétiques d'excitation qui sont guidés par le corps du rotor pour se refermer sur le stator.

Les moteurs automobiles concernés par la présente invention sont les machines synchrones à rotor bobiné.

Selon l'état de l'art, une représentation vectorielle des flux et des courants selon un diagramme de Fresnel fournit une bonne modélisation de la machine. Le repère adopté est un repère tournant solidaire du rotor. L'axe du bobinage rotor est noté « direct », d. L'axe en quadrature est noté q.

Les courants statoriques sont représentés par un vecteur courant $\vec{i_s}$, vecteur fixe de composantes $i_d$ et $i_q$ dans le repère tournant $(\vec{d},\vec{q})$. Le courant statorique direct $i_d$ et le courant statorique en quadrature $i_q$ sont obtenus à partir des mesures des courants de phase du stator ($i_A$, $i_B$ et $i_C$) et de la position électrique $\theta$ au moyen de la transformée de Park-Clarke. Le courant d'excitation rotorique est représenté par un vecteur $\vec{i_f}$, colinéaire à l'axe d.

Les courants statoriques $\vec{i_s}$ et rotorique $\vec{i_f}$ produisent un flux magnétique $\vec{\Phi_s}$, à travers les bobinages du stator, et $\vec{\Phi_f}$ à travers le bobinage du rotor. Les courants statoriques sont générés par un vecteur tension $\vec{V_s}$, résultant des tensions entre phases produites par un système de commande. Le courant d'excitation rotorique est généré par la tension de désexcitation rotorique $\vec{V_f}$ produit par le système de commande de l'excitation.

Les équations électriques vectorielles de la machine sont les suivantes :

$$\vec{V}_s = R_s.\vec{i}_s + \frac{d\vec{\Phi}_s}{dt} \qquad (Eq. 1)$$

pour le stator ; et

$$V_f = R_f.i_f + \frac{d\Phi_f}{dt} \qquad (Eq. 2)$$

pour le rotor.

Avec $R_s$ la résistance phase-neutre stator, $R_f$ la résistance bobinage rotor.

Le vecteur courant $\vec{i}_s$ pouvant se décomposer en courants $i_d$ et $i_q$, le vecteur tension $\vec{V}_s$ peut également se décomposer de façon similaire en composantes $V_d$ et $V_q$, le flux $\vec{\Phi}_s$, se décomposant également en flux $\Phi_d$ et $\Phi_q$.

On obtient alors l'ensemble d'équations suivant :

$$\begin{cases} V_d = R_s.i_d + \frac{\partial \Phi_d}{\partial i_d}.\frac{di_d}{dt} + \frac{\partial \Phi_d}{\partial i_f}.\frac{di_f}{dt} - \omega.\Phi_q \\ V_q = R_s.i_q + \frac{\partial \Phi_q}{\partial i_q}.\frac{di_q}{dt} + \omega.\Phi_d \\ V_f = R_f.i_f + \frac{\partial \Phi_f}{\partial i_f}.\frac{di_f}{dt} + \frac{\partial \Phi_f}{\partial i_d}.\frac{di_d}{dt} \end{cases} \qquad (Eq\ 3)$$

Avec $\omega$ : la pulsation électrique de la machine (vitesse angulaire multipliée par le nombre de paires de pôles).

A faibles courants, les niveaux de flux étant faibles et la machine n'étant pas magnétiquement saturée, ces équations peuvent être linéarisées. On obtient alors les équations suivantes :

$$\begin{cases} V_d = R_s.i_d + L_d.\frac{di_d}{dt} + M_f.\frac{di_f}{dt} - \omega.L_q.i_q \\ V_q = R_s.i_q + L_q.\frac{di_q}{dt} + \omega.L_d.i_d \\ V_f = R_f.i_f + L_f.\frac{di_f}{dt} + \frac{3}{2}.M_f.\frac{di_d}{dt} \end{cases} \qquad (Eq\ 4)$$

En particulier, à vitesse nulle ($\omega=0$), et si $V_d=V_q=0$, l'équation 4 devient :

$$\begin{cases} i_d = -\frac{1}{R_s}.\left( L_d.\frac{di_d}{dt} + M_f.\frac{di_f}{dt} \right) \\ i_q = -\frac{L_q}{R_s}\frac{di_q}{dt} \end{cases} \qquad (Eq\ 5)$$

On remarque que $i_q$ ne dépend pas de $i_f$. Une variation de $i_f$ altère donc $i_d$, mais pas $i_q$.

Le procédé de détermination consiste donc à procéder à une variation rapide du courant $i_f$ alors que la machine est à l'arrêt ($\omega=0$), et que la tension statorique est nulle ($\vec{V}_s = \vec{0}$). Ceci peut être obtenu par une commande de la tension $V_f$ selon un motif, par exemple, en échelon. Cette commande a pour effet une magnétisation du rotor suivie de sa démagnétisation rapide, ce qui provoque l'apparition d'un courant induit dans le stator.

En intégrant les équations différentielles de courants (Eq. 5), on obtient, pour les courants $i_d$, $i_q$, obtenus à partir des courants de phase mesurés, après transformation de Park-Clarke, un courant $i_q$ invariant, dans le cas où le décalage de mesure de position est bien appris et un courant $i_q$ proportionnel à $i_d$ dans le cas contraire. Il est alors possible, en observant la variation de courant $i_q$, de réaliser un diagnostic de la détermination du décalage, par exemple en comparant le courant $i_q$ avec un seuil de détection mémorisé si le courant $i_q$ dépasse ce seuil au cours de la démagnétisation, on déclenche l'activation d'un signal de défaut de calage angulaire.

On pourra alors obtenir la valeur réelle du décalage de mesure de position ($\Delta\theta$, en degrés d'arc) en relevant les valeurs de courant de crête de $i_d$ et $i_q$, notés $i_{d\_dr}$ et $i_{q\_dr}$ au moment de la démagnétisation rapide du rotor, noté instant $t_{dr}$ et en appliquant la formule suivante :

$$\Delta\theta = \frac{180}{\pi}.\arctan\left(\frac{i_{q\_dr}}{i_{d\_dr}}\right) \qquad\qquad (Eq. \; 6)$$

Le procédé de détermination de décalage angulaire entre rotor et stator comprend les étapes suivantes illustrées par la figure unique.

Au cours d'une première étape 1, on initialise le procédé. Pour cela, on vérifie que la valeur absolue de la vitesse de rotation $\omega$ est inférieure à un seuil $\omega_{seuil}$. Alternativement, on peut initialiser le procédé à chaque initialisation du système de commande de la machine, ou bien seulement sous certaines conditions de déclenchement, par exemple après une opération de maintenance.

Au cours de la deuxième étape 2, on commande l'application d'une tension d'excitation $V_f$ pendant un laps de temps aptes à provoquer une magnétisation partielle du rotor, c'est-à-dire à provoquer l'apparition d'un courant $i_f$ supérieur à un courant de seuil de magnétisation. Par exemple, on peut appliquer $V_f$=30V pendant 0,3s.

Immédiatement après la fin du laps de temps de l'étape 2, on applique, au cours d'une troisième étape 3, une nouvelle tension $V_f$ apte à provoquer une démagnétisation active et rapide du rotor, c'est-à-dire la réduction du courant $i_f$ en dessous d'une valeur de seuil de démagnétisation. On peut appliquer par exemple $V_f$=-$V_{bat}$ avec $V_{bat}$ la tension de batterie.

La variation rapide de $i_f$ induit un courant dans le stator uniquement selon dans l'axe d, comme prédit par l'équation 5.

La variation en forme de créneau appliquée à la tension $V_f$, ou bien à la consigne de courant $i_f$ peut être remplacée par tout motif consistant à une variation du courant d'excitation apte à provoquer une induction de courant dans le stator. On peut citer notamment des variations de forme triangulaire, sinusoïdale, ou diracs.

Alternativement, la magnétisation et la démagnétisation du rotor peuvent être réalisées en commandant le courant d'excitation $i_f$, plutôt que la tension $V_f$. Cela présente l'avantage d'une meilleure répétabilité des profils de courant, tout en accélérant la réalisation de la détermination du décalage.

Par ailleurs, pendant la durée de la démagnétisation, les courants de phase statoriques $i_A$, $i_B$, $i_C$ sont mesurés.

Au cours des étapes 2 et 3, on applique des tensions entre phases du stator nulles afin d'obtenir un rebouclage par les phases des courants statoriques induits.

Au cours d'une quatrième étape 4, on applique la transformation de Park-Clarke aux courants mesurés, en fonction de la mesure de position électrique du rotor $\theta_e$ afin d'obtenir les courants de Park $i_d$ et $i_q$ mesurés.

On rappelle l'expression de la transformation de Park-Clarke :

$$\begin{pmatrix} i_d \\ i_q \end{pmatrix} = \frac{2}{3}.\begin{bmatrix} \cos(\theta_e) & \cos(\theta_e - 2\pi/3) & \cos(\theta_e - 4\pi/3) \\ -\sin(\theta_e) & -\sin(\theta_e - 2\pi/3) & -\sin(\theta_e - 4\pi/3) \end{bmatrix}.\begin{pmatrix} i_A \\ i_B \\ i_C \end{pmatrix} \qquad (Eq. \; 7)$$

Toujours au cours de la quatrième étape, on détermine les valeurs maximales parmi les mesures des courants $i_d$ et $i_q$. Ces valeurs maximales sont mesurées en tant que valeurs $i_{d\_dr}$ et $i_{q\_dr}$. Les courants maximums sont atteints lorsque le gradient du courant d'excitation rotorique est maximum. Cela peut-être le cas en fin de démagnétisation, par exemple, lorsque le courant $i_f$ atteint zéro.

Au cours d'une cinquième étape 5, on compare la valeur $i_{q\_dr}$ à une valeur de seuil $i_{q\_max}$. Si la comparaison $|i_{q\_dr}| < i_{q\_max}$ est vérifiée, il n'y a pas d'erreur de calage. La procédure se termine par une étape 6 qui consiste en l'acquittement au système de pilotage autorisant le passage en mode fonctionnel du moteur.

Dans le cas contraire, on émet un signal de défaut de calage angulaire. Ce défaut traduit un mauvais calage angulaire de la position angulaire absolue mesurée par rapport à la position réelle du rotor par rapport au stator. La conséquence de ce mauvais calage serait un mauvais phasage des courants statoriques, et donc du flux statorique, ce qui induirait une mauvaise réalisation du couple mécanique, voire une inversion du sens de marche de la machine.

Le procédé se poursuit alors par la septième étape 7, au cours de la laquelle on détermine une correction du décalage $\Delta\theta$ en appliquant l'équation 6. La valeur de correction du décalage peut être émise. Alternativement, on détermine, au cours d'une huitième étape 8, la valeur corrigée $\theta_{0\_corr}$ du décalage $\theta_0$ de mesure de position de la manière suivante :

$$\theta_{0\_corr} = \theta_0 - \frac{180}{\pi}.\arctan\left(\frac{i_{q\_dr}}{i_{d\_dr}}\right) \qquad (Eq.\ 8)$$

Le décalage corrigé $\theta_{0\_corr}$ étant appliqué de la manière suivante :

$$\theta_e = \mod\left(\theta_{raw} - \theta_{0\_corr}, 360\right) \qquad (Eq.\ 9)$$

avec

$\theta_{raw}$ la mesure brute de position fournie par le dispositif de mesure sans calage angulaire, et
$\theta_e$ la valeur de position angulaire absolue.

Il est à noter que la correction du décalage $\theta_0$ est calculée à partir des mesures de courants statoriques induits lors de la démagnétisation. Il est également possible de calculer la correction du décalage à partir des courants statoriques mesurés lors de la magnétisation. Dans ce cas, les valeurs maximales de ces courants sont obtenues en début de séquence, lorsque le gradient du courant $i_f$ est maximal, ou, par exemple, au moment où il franchit un seuil prédéterminé réglable.

## Revendications

1. Procédé de détermination du décalage angulaire entre le rotor et le stator d'une machine électrique, le rotor étant alimenté par un courant et une tension d'excitation rotorique, le stator étant alimenté sur trois phases par des courants et tensions de phases statoriques, **caractérisé par le fait qu'**il comprend les étapes suivantes :

   on vérifie que la machine électrique est à l'arrêt,
   on applique un signal d'excitation rotorique pendant un laps de temps apte à provoquer une magnétisation partielle du rotor,
   on applique un signal de désexcitation rotorique apte à provoquer une démagnétisation active et rapide du rotor, tout en mesurant pendant la démagnétisation, les courants de phases statoriques, et en maintenant des tensions nulles entre les phases du stator,
   on détermine des courants statoriques directs et des courants statoriques en quadrature correspondant aux courants de phases statoriques mesurés par application de la transformation de Park-Clarke et en fonction d'une mesure de la position électrique du rotor,
   on détermine les valeurs maximales parmi les courants statoriques directs et les courants statoriques en quadrature,
   on émet un signal de défaut de calage angulaire si la valeur absolue de la valeur maximale du courant statorique en quadrature est supérieure à une valeur de seuil,
   on détermine une correction du décalage angulaire en radians en calculant l'arc tangente du rapport entre la valeur maximale du courant statorique en quadrature et la valeur maximale du courant statorique direct.

2. Procédé selon la revendication 1, dans lequel on procède à une magnétisation partielle du rotor en provoquant l'apparition d'un courant d'excitation rotorique supérieur à un courant de seuil de magnétisation.

3. Procédé selon l'une quelconque des revendications précédentes, dans lequel on procède à la démagnétisation du rotor en provoquant la réduction du courant d'excitation rotorique en dessous d'une valeur de seuil de démagnétisation.

**4.** Procédé selon l'une quelconque des revendications précédentes, dans lequel le signal d'excitation rotorique et le signal de désexcitation rotorique sont des courants d'excitation rotorique ou des tensions d'excitation rotorique.

**5.** Procédé selon l'une quelconque des revendications précédentes, dans lequel le signal d'excitation rotorique et le signal de désexcitation rotorique forment un motif choisi parmi des motifs de forme rectangulaire, triangulaire, sinusoïdale, ou dirac.

**6.** Procédé selon l'une quelconque des revendications précédentes, dans lequel on détermine les valeurs maximales des courants statoriques directs et des courants statoriques en quadrature en fin de démagnétisation, lorsque le courant d'excitation rotorique est nul.

**7.** Procédé selon l'une quelconque des revendications 1 à 6, dans lequel on détermine les valeurs maximales des courants statoriques directs et des courants statoriques en quadrature en début de magnétisation, lorsque le courant d'excitation atteint un certain seuil réglable.

**Patentansprüche**

**1.** Verfahren zur Bestimmung des Winkelversatzes zwischen dem Rotor und dem Stator einer elektrischen Maschine, wobei der Rotor mit einem Rotor-Erregerstrom und einer Rotor-Erregerspannung gespeist wird, wobei der Stator über drei Phasen mit Stator-Phasenströmen und -spannungen gespeist wird, **dadurch gekennzeichnet, dass** es die folgenden Schritte enthält:

es wird überprüft, dass die elektrische Maschine abgeschaltet ist,
ein Rotor-Erregersignal wird während einer Zeitspanne angelegt, das eine Teilmagnetisierung des Rotors bewirkten kann,
ein Rotor-Entregungssignal wird angelegt, das eine aktive und schnelle Entmagnetisierung des Rotors bewirken kann, bei gleichzeitiger Messung, während der Entmagnetisierung, der Stator-Phasenströme, und unter Beibehaltung von Nullspannungen zwischen den Phasen des Stators,
direkte Statorströme und Quadratur-Statorströme entsprechend den gemessenen Stator-Phasenströmen werden durch Anwendung der Park-Clarke-Transformation und abhängig von einer Messung der elektrischen Position des Rotors bestimmt,
die maximalen Werte unter den direkten Statorströmen und den Quadratur-Statorströmen werden bestimmt,
ein Winkelversatz-Fehlersignal wird gesendet, wenn der Absolutwert des maximalen Werts des Quadratur-Statorstroms höher als ein Schwellwert ist,
eine Korrektur des Winkelversatzes wird in Radian bestimmt, indem der Tangentenbogen des Verhältnisses zwischen dem maximalen Wert des Quadratur-Statorstroms und dem maximalen Wert des direkten Statorstroms berechnet wird.

**2.** Verfahren nach Anspruch 1, wobei eine partielle Magnetisierung des Rotors durchgeführt wird, indem das Auftreten eines Rotor-Erregerstroms höher als ein Magnetisierungs-Schwellenstrom bewirkt wird.

**3.** Verfahren nach einem der vorhergehenden Ansprüche, wobei die Entmagnetisierung des Rotors durchgeführt wird, indem die Verringerung des Rotor-Erregerstroms unter einen Entmagnetisierungs-Schwellenwert bewirkt wird.

**4.** Verfahren nach einem der vorhergehenden Ansprüche, wobei das Rotor-Erregersignal und das Rotor-Entregungssignal Rotor-Erregerströme oder Rotor-Erregerspannungen sind.

**5.** Verfahren nach einem der vorhergehenden Ansprüche, wobei das Rotor-Erregersignal und das Rotor-Entregungssignal ein Muster bilden, das aus Mustern rechtwinkliger, dreieckiger, sinusförmiger oder Dirac-Form ausgewählt wird.

**6.** Verfahren nach einem der vorhergehenden Ansprüche, wobei die maximalen Werte der direkten Statorströme und der Quadratur-Statorströme am Ende der Entmagnetisierung bestimmt werden, wenn der Rotor-Erregerstrom Null ist.

**7.** Verfahren nach einem der Ansprüche 1 bis 6, wobei die maximalen Werte der direkten Statorströme und der Quadratur-Statorströme am Anfang der Magnetisierung bestimmt werden, wenn der Erregerstrom eine bestimmte einstellbare Schwelle erreicht.

**Claims**

1. Method for determining the angular offset between the rotor and the stator of an electrical machine, the rotor being supplied with a rotor excitation current and voltage, the stator being supplied on three phases with stator phase currents and voltages, **characterized in that** it comprises the following steps:

   verifying that the electrical machine is at rest,
   applying a rotor excitation signal for a duration capable of causing partial magnetization of the rotor,
   applying a rotor deexcitation signal capable of causing active and rapid demagnetization of the rotor, while measuring the stator phase currents during the demagnetization, and while maintaining zero voltages between the phases of the stator,
   determining direct stator currents and quadrature stator currents, corresponding to the stator phase currents measured by applying the Park-Clarke transformation and as a function of a measurement of the electrical position of the rotor,
   determining the maximum values among the direct stator currents and the quadrature stator currents,
   transmitting an angular setting fault signal if the absolute value of the maximum value of the quadrature stator current is greater than a threshold value,
   determining an angular offset correction in radians by calculating the arctangent of the ratio of the maximum value of the quadrature stator current and the maximum value of the direct stator current.

2. Method according to Claim 1, wherein partial magnetization of the rotor is carried out by causing the appearance of a rotor excitation current greater than a magnetization threshold current.

3. Method according to either of the preceding claims, wherein the demagnetization of the rotor is carried out by causing a reduction of the rotor excitation current below a demagnetization threshold value.

4. Method according to any one of the preceding claims, wherein the rotor excitation signal and the rotor deexcitation signal are rotor excitation currents or rotor excitation voltages.

5. Method according to any one of the preceding claims, wherein the rotor excitation signal and the rotor deexcitation signal form a pattern selected from among patterns of rectangular, triangular, sinusoidal or Dirac shape.

6. Method according to any one of the preceding claims, wherein the maximum values of the direct stator currents and of the quadrature stator currents at the end of demagnetization are determined, when the rotor excitation current is zero.

7. Method according to any one of Claims 1 to 6, wherein the maximum values of the direct stator currents and of the quadrature stator currents are determined at the start of magnetization, when the excitation current reaches an adjustable threshold.

# FIG.1

```
        ┌─────────────┐
        │      1      │
        └─────────────┘
               │
               ▼
        ┌─────────────┐
        │      2      │
        └─────────────┘
               │
               ▼
        ┌─────────────┐
        │      3      │
        └─────────────┘
               │
               ▼
        ┌─────────────┐
        │      4      │
        └─────────────┘
               │
               ▼
                  ◇
┌─────────┐ non ◇   ◇ oui ┌─────────────┐
│    7    │◄───◇  5  ◇───►│      6      │
└─────────┘    ◇   ◇      └─────────────┘
     │            ◇
     ▼
┌─────────┐
│    8    │
└─────────┘
```

# FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2874466
- US 2009096396 A
- US 2005104551 A
- DE 102010017411 A1
- WO 201203825 A2
- EP 1014554 A2
- JP 2006136123 A